Europäisches Patentamt

European Patent Office

Office européen des brevets

(19)

(11) Publication number : **0 357 177 B1**

(12) **EUROPEAN PATENT SPECIFICATION**

(45) Date of publication of patent specification :
**19.07.95 Bulletin 95/29**

(51) Int. Cl.⁶ : **H04N 1/40, H04N 1/21**

(21) Application number : **89304367.9**

(22) Date of filing : **28.04.89**

(54) **Method and apparatus for color separation scanning.**

(30) Priority : **02.09.88 US 240758**

(43) Date of publication of application :
**07.03.90 Bulletin 90/10**

(45) Publication of the grant of the patent :
**19.07.95 Bulletin 95/29**

(84) Designated Contracting States :
**DE FR GB**

(56) References cited :
**EP-A- 0 225 027**
**FR-A- 2 540 319**
**GB-A- 2 134 352**
**US-A- 4 734 762**

(73) Proprietor : **ICG Limited**
**Princess Elizabeth Way**
**Cheltenham Gloucestershire GL51 7RD (GB)**

(72) Inventor : **Wirtz, John S.**
**133 Blackwell Lane**
**Henrietta New York 14417 (US)**
Inventor : **Neilson, Peter J.**
**Ivy Cottage**
**Wallow Green**
**Horsley**
**Stroud**
**GB-Gloucestershire GL6 OPD (GB)**

(74) Representative : **Goddin, Jeremy Robert et al**
**The General Electric Company plc**
**GEC Patent Department**
**Waterhouse Lane**
**Chelmsford, Essex CM1 2QX (GB)**

## Description

## BACKGROUND OF THE INVENTION

This invention relates to electronic color separation scanners. Multiple color printing processes require production of color halftone separations which are used to make printing plates corresponding to each colour ink to be printed. In a traditional four color printing process it is necessary to produce cyan, magenta, yellow and black halftone separations which are used to make printing plates for printing cyan, magenta, yellow and black process inks, respectively.

Originally, halftone separations were produced on a camera by exposing original color artwork sheets of film through color separation filters and appropriate halftone screens having the desired screen angles and screen pitch. This method obtained relatively inexpensive production of halftone separations, but was tedious, time consuming and required extensive operator training. With the advent of reliable electronic scanners, color separations are no longer produced using a camera.

An electronic color scanner typically includes a rotating scanning drum for analyzing original artwork and an electric dot generator for exposing halftones. In operation, the color scanner scans original color artwork to obtain red, green and blue colour data, processes and stores the information for the entire workpiece, and thereafter electronically exposes cyan, magenta, yellow and black halftone separations. Available electronic color scanners typically utilize a laser dot generator to expose the halftone separations onto film wrapped around a rotating exposure drum. Unfortunately, electronic color scanners are very complex and require substantial training and experience to operate. Electronic color scanners are also very expensive, which makes them economically unfeasible for most printers interested in producing color halftone separations, resulting in the common practice to contract this service to a color separation house.

EP-A-0225027 discloses a method of generating an electronic representation of an original image which comprises illuminating the image with a scanning beam; causing relative movement between the scanning beam impinging on the image and the image whereby the original image is scanned in a series of overlapping scan lines. The scanning beam is caused to impinge on one or more arrays of radiation sensitive elements, each array having dimensions smaller than the dimensions of the image and the elements being sensitive to the intensity of respective portions of the incident beam received from corresponding pixels of the original image within a scan line at least some of which extends transversely to the scanning direction. The sensed intensities are regularly monitored and data related to the intensities monitored in a predetermined number n of the monitoring steps is stored in a memory. A predetermined algorithm, such as an edge enhancement, is applied to the stored data to generate enhanced image data and part of the stored data is replaced with the enhanced image data.

US-A-4734762 discloses a color image reading apparatus with a plurality of line sensors and an associated plurality of rotary color filter disks produces a plurality of sequential color component signals from each line sensor. An amplifier with an adjustable gain is provided for each of the line sensors. A white balance operation is performed prior to reading a color document by determining gains for each of the amplifiers to use in amplifying corresponding ones of the sequential color component signals on the basis of a plurality of reference color component signals generated by reading a white reference plate with the line sensors. The determined gains are stored in a memory as digital data. The data is read out and used to control the gains of the amplifiers while a color document is being read. Color balance correction switch units enable an operator to selectively modify the determined gains in order to adjust the color balance of the color component signals.

GB-A-2 134352 discloses a method for emphasizing the sharpness upon scanning and recording a picture, which method comprises employing, as a light exposing signal,

$$S + k(S - U)$$

where

S: a sharp signal as a picture element signal at a scanning point upon scanning and recording the picture;

U: an unsharp signal obtained by summing and averaging a plurality of picture element signals aligned in one of the scanning directions in the vicinity of the scanning point and then summing and averaging a plurality of resulting summed and averaged picture signals aligned in the other scanning direction in the vicinity of the scanning point; and

k: a sharpness emphasizing coefficient.

## SUMMARY OF THE INVENTION

With the foregoing in mind, it is an object of the invention to provide a data input method and apparatus for a relatively inexpensive color separation scanner that minimizes data input errors.

It is a further object of the invention to provide a data input method and apparatus for a color separation scanner that allows movement of a workpiece to be scanned in a continuous motion.

It is a further object of the invention to provide a color separation scanner that transfers data from the input detector to the output printer in a substantially continuous data stream.

Additional objects and advantages of the invention are set forth in part herein and in part will be obvious herefrom, or may be learned by practice with the invention, the same being realized and attained by means of the instrumentalities and combinations pointed out in the appended claims.

According to the invention there is provided a colour separation scanner comprising a flat table for supporting artwork, an electronic image reader positioned to detect linear strips of the artwork, drive means for causing relative linear movement between the table and the image reader in a direction perpendicular to the linear strips, and a colour separation filter device operable to interpose a series of different colour separation filters between each strip and the image reader, characterised in that the drive means is arranged to cause continuous relative linear movement between the table and the image reader during scanning of the artwork, the colour separation filter device is arranged to be driven in conjunction with the relative movement between the table and the image reader to cause the image reader to make multiple overlapping scans of the artwork through each different colour of the separation filters, data averaging means is arranged to average data received from the image reader in respect of a set number of successive overlapping scans of the artwork through each colour of the separation filter, and data storage means is arranged to store the averaged data for each set of successive overlapping scans.

Further according to the invention there is provided a method of colour separation scanning comprising causing relative linear movement between artwork and an image reader, and interposing a series of different colour separation filters sequentially between the image reader and a linear strip of the artwork that is perpendicular to the direction of relative linear movement, characterised by causing continuous relative linear movement between the artwork and the image reader, moving the series of different colour separation filters continuously between the image reader and the artwork to cause the image reader to make multiple overlapping scans of the artwork through each different colour of the colour separation filters, averaging data produced by the image reader during a set number of successive overlapping scans of the artwork through each colour of the separation filter, and storing the averaged data for each set of successive overlapping scans.

## BRIEF DESCRIPTION OF THE DRAWINGS

The accompanying drawings, referred to herein and constituting a part hereof, illustrate a preferred embodiment of the invention and, together with the description, serve to explain the principles of the invention, wherein:

Fig. 1 is a front sectional view of a scanner according to the invention;

Fig. 2 is a side sectional view of a scanner according to the invention;

Fig. 3 is a block diagram according to the invention;

Fig. 4 is a block diagram according to the invention; and

Fig. 5 is a data flow diagram of the color correction module according to the invention.

## DETAILED DESCRIPTION OF THE PREFERRED EMBODIMENT

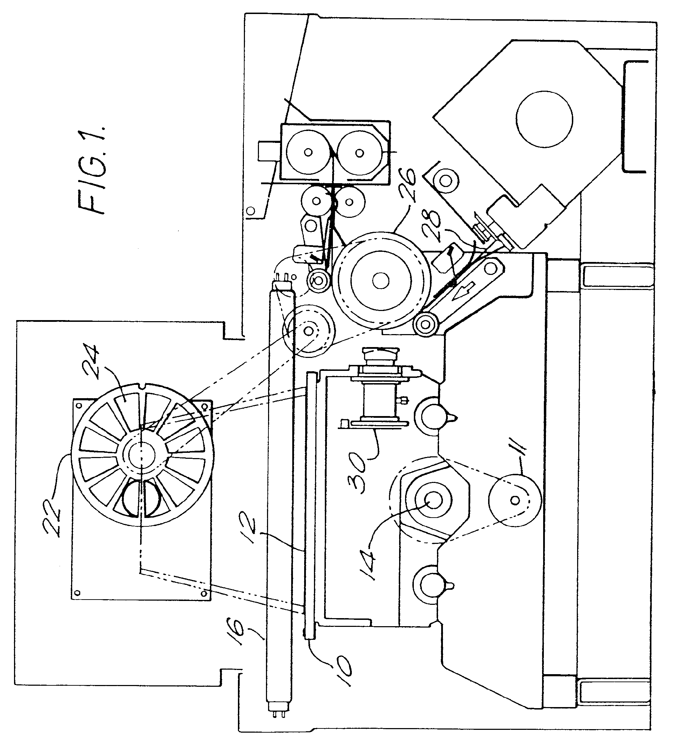

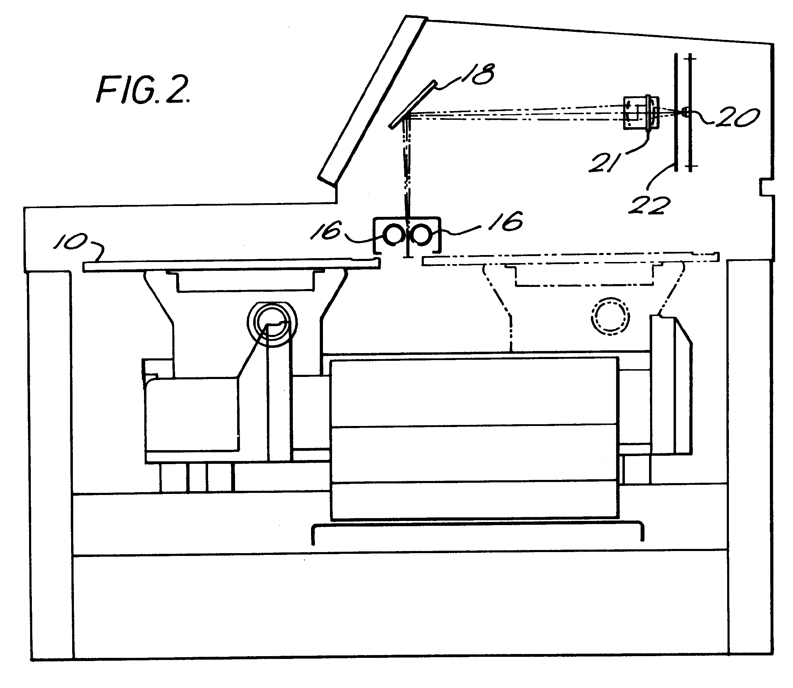

Fig. 1 shows a front sectional view and Fig. 2 shows a side sectional view of a scanner according to the invention.

In general, reference numeral 10 indicates a table with workpiece 12 (e.g., original color artwork) thereon. Table 10 is driven by table motor 11 using drive screw 14. Positioned above table 10 are fluorescent lights 16 and mirror 18.

Reference numeral 20 indicates a linear detector, such as a charge-coupled device (CCD), situated behind lens 21. Linear detector CCD 20 may be comprised of 2592 individual pixels. Lens 22 is positioned so as to focus light reflected from a linear portion of workpiece 12 via mirror 18 onto CCD 20. Filter wheel 22 is positioned between lens 21 and CCD 20 and is divided into twelve sectors each containing an individual red, green or blue filter 24. The filters are arranged such that on a single rotation of filter wheel 22, a filter pattern of the three colors (e.g., red, green, blue) will repeat four times. Fluorescent lights 16, individual filters 24, and CCD 20 are all chosen to provide a substantially balanced response throughout the color spectrum. An infrared filter may also be provided to reduce undesired response of the CCD detector in the infrared region of the spectrum.

Parallel to the direction of travel of table 10 is situated a rotatable drum 26 with a sheet of photosensitive material 28 able to be loaded and held onto the surface thereof for scanning exposure. In close proximity to rotatable drum 26 is a dot generator system including an LED array 30 adapted to expose the photosensitive material to produce a halftone image. Rotatable drum 26 is driven by a drum motor. Filter wheel 22 is rotatably coupled to rotatable drum 26 so that one rotation of the drum corresponds to one rotation of the filter wheel

Table motor 11 and the drum motor are controlled using phase-lock-loop (PLL) circuits with pulse width modulation. To ensure synchronization, the circuits are run off the same 16 MHz system clock. Encoders (not shown) are operatively connected to drum 26 and to table motor 11 as position/speed detectors, and may consist of commercially available 1000 increment position indicators which provide 1000 pulses per drum revolution and per motor revolution, respectively. Additionally, an index pulse once per revolution is provided at drum 26. It will be appreciated that a count of the pulses may provide a means for position determination at any point. The index pulse is synchronized with the beginning of a red filter on the filter wheel thereby providing position determination means for the filter wheel as well. It will also be appreciated that by using a single system clock, control problems are significantly reduced. If the system begins to drift, all components and circuits will drift together.

In accordance with the previously described embodiment, operation of the scanner will be described hereinafter.

Scanning is commenced when a scanning index mark associated with the lead edge of the workpiece reaches the lights 16. During scanning, the table 10 advances slowly and reflected light from linear portions of the workpiece are alternately detected through individual red, green and blue color filters 24. Preferably, scanned reading from one full filter wheel revolution are averaged for each color and correspond to one scan line to be exposed. For example, all readings through the four red filters are averaged to obtain red data used to determine the corresponding exposure data for one exposure scan line. This advantageously reduces color fringe effects and noise. This data averaging will be explained in greater detail below.

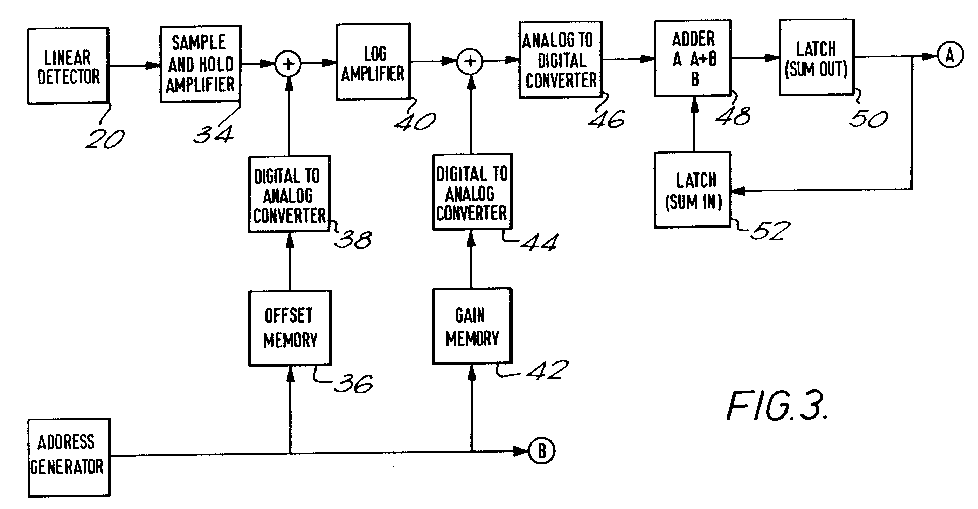

Referring to Fig. 3, light reflected from a linear portion of the workpiece passes through a linear aperture (not shown) and is reflected through an infrared filter (not shown), a lens 21 and a color filter 24 of filter wheel 22 to a charge coupled device ("CCD") linear detector 20. The light is reflected from workpiece 12 through mirror 18. As each filter 24 passes in front of the CCD 20, CCD 20 is exposed for the period of time that the filter is in front of the CCD (approximately 5 milliseconds). As each spoke on the filter wheel passes, a new color filter is brought into position. During a subsequent exposure, the data from the previous exposure is clocked out serially as an analog signal. The voltage of the analog signal is proportional to the reflectance of the workpiece at the particular pixel on the CCD.

The signal is thereafter passed through sample and hold amplifier 34. The sample and hold amplifier minimizes noise in the analog signal by sampling the signal at an area of interest (i.e., particular peaks, valleys, etc.).

The signal output from sample and hold amplifier 34 is then corrected by offset factors to minimize the effect of different pixel characteristics of the CCD on the data. Offset factors are stored digitally in offset memory 36 in the format of one factor for each pixel of the CCD (i.e., 2592 pixels). The offset factors are read out and converted to an analog signal by digital to analog converter 38 and are added to the signal output of sample and hold amplifier 34. This correction, added to the signal as it is strobed out of the CCD, serves to linearize the response of the system.

The analog signal, corrected for varying pixel characteristics, then passes through log amplifier 40 to compress the signal. The log amplifier serves to compress the data signal by converting the signal into a signal wherein the voltage is proportional to the reflection density, rather than the light intensity, of the workpiece.

The signal output from log amplifier 40 is then corrected for the effects of individual pixel characteristics, different colors, and lens differences. Gain factors (3 colors x 2592 pixels) stored digitally in gain memory 42 are read out and converted to an analog signal in digital to analog converter 44 and are multiplied by the signal output by the log amplifier 40. The resulting signal output is then converted by analog to digital converter 46 to a digital signal. As a result, the scan data output from each pixel of CCD 20 becomes a 6 bit data value.

Adder 48 takes the digital signal from analog to digital converter 46 and adds to it previous data values for that color taken during that rotation of the filter wheel. On the first red, green, and blue scan for each rotation of the filter wheel there are no previous data values, therefore, the adder skips the addition for the first three filter scans after an index pulse. These first values (3 colors x 2592 pixels) are shifted to latch (sum out) 50 and latch (sum in) 52 and stored in random access memory, memory A 56. For the next set of three colors, the adder 48 adds the input data to that stored in memory A 56 after shifting the data from the previous set of three colors to latch (sum out) 50 and latch (sum in) 52. This process continues for the 4 exposures for each color filter scanned in a single rotation of the filter wheel 22. At the beginning of a new rotation, memories A and B need not be erased as the first set of three-color data passes through the adder 48 unaffected and overwrites the final data from the previous rotation that remains in memory A 56, latch (sum out) 50, and latch (sum in) 52. Similarly, the data in memory B 58 may be overwritten.

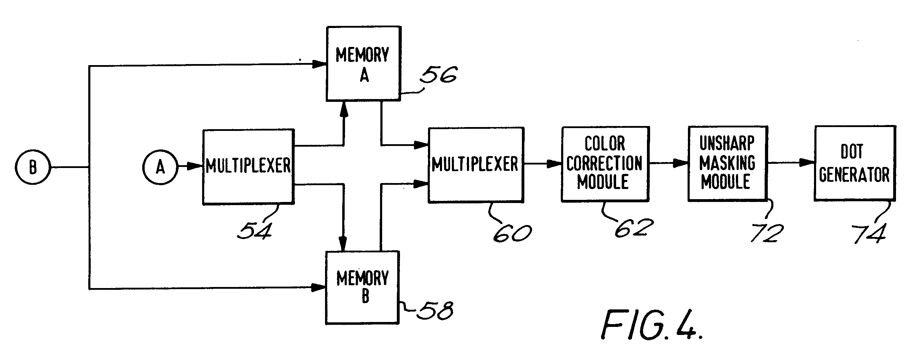

Referring to Fig. 4, the data output by adder 48 at the end of each rotation passes through multiplexer 54 and into memory A 56. The data values stored in memory A 56 is the sum of four exposures of each pixel for each color (3 colors x 2592 pixels). On the completion of a revolution of the filter wheel 22, data input is switched by a control circuit (not shown), responsive to the drum index pulses, via multiplexers 54, 60 from memory A 56 to memory B 58. Such control circuits are well known in the art. This makes memory A 56 available for data output through multiplexer 60 to subsequent processes in the system (i.e., to the color correction module 62). It will be appreciated that since the LED array 30 outputs to the photosensitive material 28 at the same rate of movement as the scanning table to expose the halftone image line by line corresponding to the linear scans of the original, relatively little memory is required.

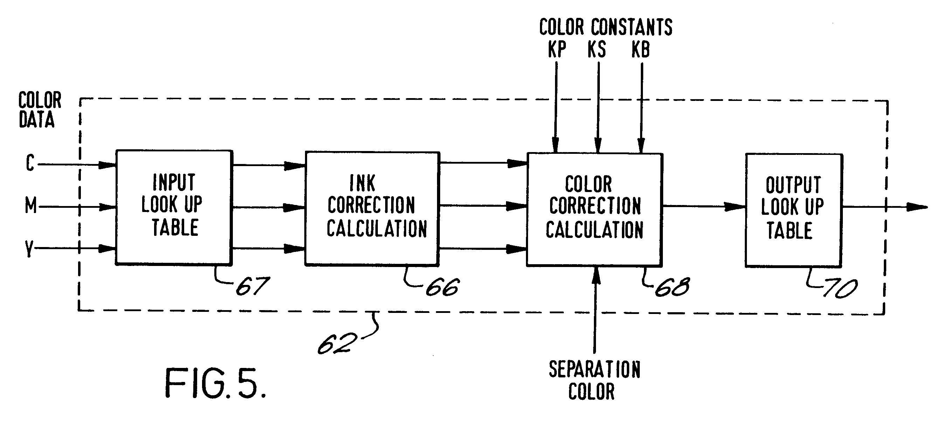

Referring to Fig. 5, data comes into the color correction module 62 as cyan, magenta and yellow data corresponding to the averaged red, green and blue scanned values for each workpiece pixel. As the data enters the color correction module, corrections are made for imperfections in the input data. The values in input lookup table 67 serve to adjust the balance between colors and perform curve shaping on the "gray scale" prior to mixing. The data is thereafter corrected for ink imperfections by the following formulas:

$$C_2 = 1.2 \times C_1 - 0.1 \times Y_1 - 0.1 \times M_1$$
$$M_2 = 1.94 \times M_1 - 0.2 \times Y_1 - 0.74 \times C_1$$
$$Y_2 = 2 \times Y_1 - 1 \times M_1$$

Wherein:

$C_1$    is the input cyan data value (prior to ink correction)

$C_2$    is the output cyan data value (after ink correction)

$M_1$    is the input magenta data value (prior to ink correction)

$M_2$    is the output magenta data value (after ink correction)

$Y_1$    is the input yellow data value (prior to ink correction)

$Y_2$    is the output yellow data value (after ink correction).

The coefficients in the above formulas are representative of typical values. It will be appreciated that the exact coefficient values change for different inks.

The resulting data values are thereafter sorted to determine the maximum, middle, and minimum values for the three colors (e.g., cyan - maximum data value, magenta - middle data value, and yellow - minimum data value).

Once the data has been sorted from minimum to maximum data values, color differentials are calculated as follows:

CCP    = maximum data value - middle data value
CCS    = middle data value - minimum data value
K    = minimum data value

Wherein:

CCP    is the primary color correction data differential
CCS    is the secondary color correction data differential
K    is the base color data value or black value

Thereafter, color constants for both the primary (maximum data value) and the secondary (middle data value) colors are looked up from memory. Color constants are stored as a primary and a secondary color constant for each color plus one for black (7 constants in all). The calculation of the color correction is as follows:

CC = Color + KP x CCP + KS x CCS + KB x K

Wherein:

CC is the corrected color data
Color is the selected separation color
KP is the primary color constant (between -1 and +1)
CCP is the primary differential color
CCS is the secondary differential color
KS is the secondary color constant (between -1 and +1
KB is the color constant for black (between 0 and -1)
K is the minimum color data value

The corrected color data is finally adjusted using the factors stored in output lookup table 70. The information stored in output lookup table 70 reshapes the "gray scale" curve and may, for example, lessen the amount of black in the output or shift cyan to print darker in the entire range of output. The specific data values in output lookup table 70 may depend on paper used, ink used, and particular user preferences.

It will also be appreciated by those skilled in the art that the color correction module may by adapted to add additional features to the image being processed. For example, the color correction module may establish borders (white, black, etc.) around the image. The color correction module may also provide tinting or a lessening of the dot area if desired.

Referring to Fig. 4, the data from the color correction module 62 is transferred to unsharp masking module 72. The data entering the unsharp masking module 72 is a color corrected picture pixel value. When the unsharp masking module detects a change in data values exceeding a given level (e.g., 40%), the module exaggerates the amount of change to enhance the edge sharpness of the image. The enhancement of edge sharpness may be accomplished by averaging data from pixels surrounding the pixel to be exaggerated. In order to accomplish this averaging, the data for more than one line must be stored in the module. For each pixel, the data for the immediate surrounding pixels is used for sharpness enhancement. To average the pixels for sharpness enhancement using the immediately surrounding pixels (a 3 pixel x 3 pixel cube), three lines of data must be stored. It will be appreciated that averaging may be done utilizing more lines if desired. It will also be appreciated that, as this is the only point in the data stream that more than one line of data is held, a slight delay in the data stream from scanner input to output is introduced.

The data from the unsharp masking module 72 is outputted to the dot generator 74. Dot generator 74 may be adapted to work in cooperation with a laser dot generator (not shown) or, preferably, LED array 30 for printing on photosensitive material. A suitable dot generator including an LED array is disclosed in copending patent application serial no. 071/241100 (US-A04915,530) entitled HIGH RESOLUTION HALFTONE DOT GENERATOR SYSTEM INCLUDING LED ARRAY, the disclosure of this patent application is incorporated herein in its entirety by reference.

As will be appreciated from the foregoing description, table 10, rotating drum 26, and filter wheel 22 are driven in synchronization by motors 12, 32 throughout the scan, with the preferred LED array 30 exposing the photosensitive material on drum 26 as the table advances. Of course, exposure will lag input scanning slightly in order to permit processing of scanned data to generate appropriate exposure signals.

During scanning, CCD 20 views and detects a linear strip on the original artwork approximately 0.00352 inches wide and having a length sufficient to extend across the width of the color original. A linear strip of the original is detected through each individual filter 24 as the table advances. As will be readily appreciated, however, the scanning table will have advanced slightly between the respective scans through one set of individual filters 24. To compensate for any color fringe effects or input data smearing which might otherwise result from slight misalignment of the red, green and blue images, filter wheel 22 is preferably provided with four sets of color filters.

In the preferred embodiment, the four signals corresponding to any given filter color are effectively averaged to produce a single corresponding exposure signal. By way of example, all four detector signals corresponding to an individual red filter 24 are averaged and taken into account to generate corresponding exposure values for a single line to be exposed on the halftone separation. Advantageously, this eliminates color fringe effects and input data smearing which might otherwise be introduced by the slight positional displacement of corresponding red, green and blue linear scans due to continuous scanning table movement. In addition, the multiple scan and averaging technique effectively compensates for dust interference and other aberrational effects which may be introduced during a single scan. The multiple scan and averaging technique allows the use of a continuous drive table eliminating the need for the workpiece to be moved in a step-wise fashion.

Signals from the CCD 20 are processed to activate the individuals LED's of LED array 30 as drum 26 bearing photosensitive material rotates at high speed. Advantageously, the exposure of LED array 30 is advanced simultaneously with the table, thereby eliminating the need for an additional synchronized motor to drive the exposure head axially across the drum surface.

Although the scanner scans the original for red, green and blue data as the table is advanced, only one halftone separation is exposed during one cycle of movement of the table from the first table position to the last table position. Thus, four passes with the table are required to produce four halftone separations. In the preferred embodiment, a minimum of scanned workpiece data is stored, with scanning and exposure being performed essentially "on the fly" for each halftone separation. Of course, it is also contemplated that memory could be provided to store the scanned information so that input scanning could be performed only on the first scan, with the input scanning elements being deactivated during subsequent passes to expose the remaining halftone separations from one set of scanned original data.

While the invention has been described in its preferred embodiments, it is to be understood that the words which have been used are words of description, rather than limitation, and that changes may be made within the purview of the appended claims without departing from the true scope of the invention in its broader aspects. For example, incorporation of a calibration step is also contemplated. Thus, for calibration the scanning table is advanced until a white calibration standard is disposed beneath lights 16. Readings are taken and electrical adjustments are made based on the white reading and the data for the gain memory are obtained. Thereafter, movable a neutral density filter is interposed in the optical path and a low light level or "dark" calibration reading is taken and the data for the offset memory are obtained. It is also contemplated that either or both of the foregoing calibration steps may be performed at the beginning of each scan or at the beginning of the first of four scans for a set of halftone separations.

## Claims

1. A colour separation scanner comprising a flat table for supporting artwork, an electronic image reader positioned to detect linear strips of the artwork, drive means for causing relative linear movement between the table and the image reader in a direction perpendicular to the linear strips, and a colour separation filter device operable to interpose a series of different colour separation filters between each strip and the image reader, characterised in that the drive means (14) is arranged to cause continuous relative linear movement between the table (10) and the image reader (20) during scanning of the artwork (12), the colour separation filter device (22, 24) is arranged to be driven in conjunction with the relative movement between the table and the image reader to cause the image reader to make multiple overlapping scans of the artwork through each different colour of the separation filters (24), data averaging means (48, 50, 52) is arranged to average data received from the image reader in respect of a set number of successive overlapping scans of the artwork through each colour of the separation filter, and data storage means (56, 58) is arranged to store the averaged data for each set of successive overlapping scans.

2. A colour separation scanner, as in Claim 1, characterised in that the colour separation filter device (22, 24) is arranged to be driven to provide four successive overlapping scans of each linear strip of artwork which is substantially one pixel wide.

3. A colour separation scanner, as in Claim 2, in which the colour separation filter device (22, 24) comprises a rotatable filter wheel (22) carrying four sets of colour separation filters (24) which are evenly spaced circumferentially in the same colour sequence, and the filter wheel (22) is arranged to be rotated once during relative movement between the table (10) and the image reader (20) equivalent to the width of each linear strip of the artwork.

4. A colour separation scanner, as in any preceding claim, characterised in that the data averaging means (48, 50, 52) comprises an adder (48) operatively connected to the data storage means (56, 58) through a sum out latch (50) arranged in parallel with a sum in latch (52).

5. A colour separation scanner, as in any preceding claim, characterised in that multiplexers (54, 60) are arranged to switch data output from the data averaging means (48, 50, 52) from one data storage means (56) to another data storage means (58) at the end of each set of successive overlapping scans.

6. A colour separation scanner, as in any preceding claim, characterised in that a printer (26, 30) has a rotatable drum (26) drivably connected to the colour separation filter device (22, 24), and a printing means (30) arranged to produce an image on material supported by the drum (26), and the printing means (30) is operable by the averaged data.

7. A colour separation scanner, as in any preceding claim, characterised in that the image reader is a single charge-coupled device (20) arranged to scan the entire width of the artwork in a direction perpendicular to the relative movement between the table (10) and the device (20).

8. A method of colour separation scanning comprising causing relative linear movement between artwork and an image reader, and interposing a series of different colour separation filters sequentially between the image reader and a linear strip of the artwork that is perpendicular to the direction of relative linear movement, characterised by causing continuous relative linear movement between the artwork (12) and the image reader (20), moving the series of different colour separation filters (24) continuously between the image reader (20) and the artwork (12) to cause the image reader (20) to make multiple overlapping scans of the artwork (12) through each different colour of the colour separation filters (24), averaging data produced by the image reader (20) during a set number of successive overlapping scans of the artwork through each colour of the separation filter, and storing the averaged data for each set of successive overlapping scans.

9. A method of colour separation scanning, as in Claim 8, characterised by causing the image reader (20) to make four successive overlapping scans of each linear strip of artwork having a width of substantially one pixel.

10. A method of colour separation scanning, as in Claim 8 or 9, characterised by storing the averaged data from one set of successive overlapping scans in a first memory (56) and storing the averaged data from the next set of successive overlapping scans in a second memory (58) whilst the averaged data in the first memory (56) is being used to operate a printer (26, 30).

11. A method of colour separation scanning, as in any of Claims 8 to 10, characterised by continuously feeding a printing material through a printer (26) at the same speed as the continuous relative movement between the artwork (12) and the image reader (20).

**Patentansprüche**

1. Ein Farbtrennungsabtaster mit einem flachen Tisch zum Tragen eines Kunstwerkes, einem elektronischen Bildleser, der dazu positioniert ist, lineare Streifen des Kunstwerkes zu detektieren, einem Antriebsmittel zum Verursachen relativer linearer Bewegung zwischen dem Tisch und dem Bildleser in einer Richtung senkrecht zu den linearen Streifen und einer Farbtrennfiltervorrichtung, die betätigbar ist, um eine Reihe von unterschiedlichen Farbtrennfiltern zwischen jeden Streifen und den Bildleser zwischenzusetzen, dadurch **gekennzeichnet,** daß das Antriebsmittel (14) dazu angeordnet ist, kontinuierliche relative Linearbewegung zwischen dem Tisch (10) und dem Bildleser (20) während der Abtastung des Kunstwerkes (12) zu verursachen, die Farbtrennfiltervorrichtung (22, 24) dazu angeordnet ist, in Verbindung mit der relativen Bewegung zwischen dem Tisch und dem Bildleser angetrieben zu sein, um zu veranlassen, daß der Bildleser multiple überlappende Abtastungen des Kunstwerkes durch jede unterschiedliche Farbe der Trennfilter (24) bildet, ein Datenmittlungsmittel (48, 50, 52) dazu angeordnet ist, Daten zu mitteln, die aus dem Bildleser empfangen werden, und zwar in Bezug auf eine eingestellte Anzahl von sukzessiven überlappenden Abtastungen des Kunstwerkes durch jede Farbe des Trennfilters, und ein Datenspeichermittel (56, 58) dazu angeordnet ist, die gemittelten Daten für jeden Satz von sukzessiven überlappenden Abtastungen zu speichern.

2. Ein Farbtrennabtaster nach Anspruch 1, dadurch **gekennzeichnet**, daß die Farbtrennfiltervorrichtung (22, 24) dazu angeordnet ist, angetrieben zu sein, um vier sukzessive überlappende Abtastungen von jedem linearen Streifen des Kunstwerkes vorzusehen, welcher im wesentlichen ein Pixel breit ist.

3. Ein Farbtrennabtaster nach Anspruch 2, in welchem die Farbtrennfiltervorrichtung (22, 24) ein drehbares Filterrad (22) umfaßt, das vier Sätze von Farbtrennfiltern (24) trägt, welche in Umfangsrichtung gleichmäßig in der gleichen Farbsequenz beabstandet sind, und das Filterrad (22) dazu angeordnet ist, einmal während der relativen Bewegung zwischen dem Tisch (10) und dem Bildleser (20) gedreht zu werden, die der Breite von jedem linearen Streifen des Kunstwerkes äquivalent ist.

4. Ein Farbtrennabtaster nach einem vorhergehenden Anspruch, dadurch **gekennzeichnet**, daß das Datenmittlungsmittel (48, 50, 52) einen Addierer (48) umfaßt, der operativ mit dem Datenspeichermittel (56, 58) durch ein Aussummierungshalteglied (50) verbunden ist, das parallel zu einem Einsummier-Halteglied (52) angeordnet ist.

5. Ein Farbtrennabtaster nach irgendeinem vorhergehenden Anspruch, dadurch **gekennzeichnet**, daß Multiplexer (54, 60) dazu angeordnet sind, Daten, die aus dem Datenmittlungsmittel (48, 50, 52) ausgegeben sind, von einem Datenspeichermittel (56) zu einem anderen Datenspeichermittel (58) beim Ende von jedem Satz von sukzessiven überlappenden Abtastungen zu schalten.

6. Ein Farbtrennabtaster nach irgendeinem vorhergehenden Anspruch,

dadurch **gekennzeichnet**, daß ein Drucker (26, 30) eine drehbare Trommel (26) aufweist, die antreibbar mit der Farbtrennfiltervorrichtung (22, 24) verbunden ist, und ein Druckmittel (30) dazu angeordnet ist, ein Bild auf Material zu erzeugen, das von der Trommel (26) getragen wird, und das Druckmittel (30) durch die gemittelten Daten betätigbar ist.

7. Ein Farbtrennabtaster nach irgendeinem vorhergehenden Anspruch, dadurch **gekennzeichnet**, daß der Bildleser eine einzelne ladungsgekoppelte Vorrichtung (20) ist, die dazu angeordnet ist, die ganze Breite des Kunstwerkes in einer Richtung senkrecht zu der relativen Bewegung zwischen dem Tisch (10) und der Vorrichtung (20) abzutasten.

8. Ein Verfahren der Farbtrennabtastung, das umfaßt, daß eine relative lineare Bewegung zwischen einem Kunstwerk und einem Bildleser verursacht wird, und eine Reihe von unterschiedlichen Farbtrennfiltern sequentiell zwischen den Bildleser und einen linearen Streifen des Kunstwerkes eingeschoben wird, der senkrecht zu der Richtung der relativen Linearbewegung verläuft, dadurch **gekennzeichnet**, daß eine kontinuierliche relative lineare Bewegung zwischen dem Kunstwerk (12) und dem Bildleser (20) verursacht wird, die Reihe von unterschiedlichen Farbtrennfiltern (24) kontinuierlich zwischen dem Bildleser (20) und dem Kunstwerk (12) bewegt wird, um den Bildleser (20) dazu zu veranlassen, multiple überlappende Abtastungen des Kunstwerkes (12) durch jede unterschiedliche Farbe der Farbtrennfilter (24) zu bilden, Daten gemittelt werden, die durch den Bildleser (20) während einer eingestellten Anzahl von sukzessiven überlappenden Abtastungen des Kunstwerkes durch jede Farbe des Trennfilters erzeugt werden, und die gemittelten Daten für jeden Satz von sukzessiven überlappenden Abtastungen gespeichert werden.

9. Ein Verfahren der Farbtrennabtastung nach Anspruch 8, dadurch **gekennzeichnet**, daß der Bildleser (20) dazu veranlaßt wird, vier sukzessive überlappende Abtastungen von jedem linearen Streifen des Kunstwerkes mit einer Breite von im wesentlichen einem Pixel zu bilden.

10. Ein Verfahren der Farbtrennabtastung nach Anspruch 8 oder 9, dadurch **gekennzeichnet**, daß die gemittelten Daten aus einem Satz von sukzessiven überlappenden Abtastungen in einem ersten Speicher (56) gespeichert werden, und die gemittelten Daten aus dem nächsten Satz von sukzessiven überlappenden Abtastungen in einem zweiten Speicher (58) gespeichert werden, während die gemittelten Daten in dem ersten Speicher (56) verwendet werden, um einen Drucker (26, 30) zu betreiben.

11. Ein Verfahren der Farbtrennabtastung nach einem der Ansprüche 8 bis 10,
dadurch **gekennzeichnet,**
daß ein Druckmaterial kontinuierlich durch einen Drucker (26) mit der gleichen Geschwindigkeit wie die kontinuierlich relative Bewegung zwischen dem Kunstwerk (12) und dem Bildleser (20) gespeist wird.

## Revendications

1. Scanner à séparation de couleurs, comprenant une table plane pour supporter un document ; un lecteur électronique d'image placé de manière à détecter des bandes linéaires du document ; des moyens d'entraînement pour provoquer un mouvement linéaire relatif entre la table et le lecteur d'image dans une direction perpendiculaire aux bandes linéaires ; et un dispositif de filtrage à séparation de couleurs capable de fonctionner pour interposer une série de filtres différents de séparation de couleurs entre chaque bande et le lecteur d'image ; caractérisé en ce que les moyens d'entraînement (14) sont agencés de manière à provoquer un mouvement linéaire relatif continu entre la table (10) et le lecteur d'image (20) pendant le balayage du document (12), en ce que le dispositif de filtrage à séparation de couleurs (22, 24) est agencé de manière à être entraîné en relation avec le mouvement relatif entre la table et le lecteur d'image pour amener le lecteur d'image à procéder à une multiplicité de balayages du document en chevauchement à travers chaque couleur différente des filtres de séparation (24), en ce que des organes de moyennage (48, 50, 52) sont agencés pour moyenner les données reçues du lecteur d'image par rapport à un nombre fixé de balayages successifs du document en chevauchement à travers chaque couleur du filtre de séparation, et en ce que des moyens de stockage (56, 58) sont agencés pour stocker les données moyennées pour chaque groupe de balayages successifs en chevauchement.

2. Scanner à séparation de couleurs, selon la revendication 1, caractérisé en ce que le dispositif de filtrage à séparation de couleurs (22, 24) est agencé de manière à être entraîné pour fournir quatre balayages successifs en chevauchement de chaque bande linéaire de document, qui a une largeur sensiblement égale à un pixel.

3. Scanner à séparation de couleurs, selon la revendication 2, dans lequel le dispositif de filtrage à séparation de couleurs (22, 24) comprend une roue de filtrage rotative (22) qui porte quatre groupes de filtres de séparation de couleurs (24) qui sont également espacés circonférentiellement et dans la même séquence de couleurs, et la roue de filtrage (22) est agencée de manière à être tournée une fois pendant le mouvement relatif entre la table (10) et le lecteur d'image (20) qui équivaut à la largeur de chaque bande linéaire du document.

4. Scanner à séparation de couleurs, selon l'une quelconque des revendications précédentes, caractérisé en ce que les organes de moyennage (48, 50, 52) comprennent un circuit additif (48) fonctionnellement relié aux moyens de stockage de données (56, 58) via un circuit de blocage (50) de sommation en sortie, agencé en parallèle avec un circuit de blocage (52) de sommation en entrée.

5. Scanner à séparation de couleurs, selon l'une quelconque des revendications précédentes, caractérisé en ce qu'il est prévu des multiplexeurs (54, 60) agencés de manière à commuter la sortie des organes de moyennage (48, 50, 52) depuis l'un des moyens de stockage de données (56) vers un autre moyen de stockage de données (58) à la fin de chaque groupe de balayages successifs en chevauchement.

6. Scanner à séparation de couleurs, selon l'une quelconque des revendications précédentes, caractérisé en ce qu'il est prévu une imprimante (26, 30) comportant un tambour rotatif (26) relié en termes d'entraînement au dispositif de filtrage à séparation de couleurs (22, 24), et des moyens d'impression (30) agencés de façon à produire une image sur un matériau supporté par le tambour (26), et les moyens d'impression (30) pouvant être commandés par les données moyennées.

7. Scanner à séparation de couleurs, selon l'une quelconque des revendications précédentes, caractérisé en ce que le lecteur d'image est un dispositif unique à couplage de charges (20) agencé de manière à balayer la largeur entière du document dans une direction perpendiculaire au mouvement relatif entre la table (10) et le dispositif (20).

8. Procédé pour balayer (scanner) avec séparation de couleurs, comprenant les opérations consistant à provoquer un mouvement linéaire relatif entre un document et un lecteur d'image, et à interposer une série de filtres à séparation de couleurs différents en séquence entre le lecteur d'image et une bande linéaire du document qui est perpendiculaire à la direction du mouvement linéaire relatif, caractérisé par les étapes consistant à provoquer un mouvement linéaire continu entre le document (12) et le lecteur d'image (20), à déplacer la série de filtres de séparation de couleurs différents (24) en continu entre le lecteur d'image (20) et le document (12) pour amener le lecteur d'image (20) à procéder à une multiplicité de balayages en chevauchement du document (12) à travers chaque couleur différente des filtres à séparation de couleurs (24), à moyenner les données produites par le lecteur d'image (20) pendant un nombre fixé de balayages successifs en chevauchement du document à travers chaque couleur du filtre de séparation, et à stocker les données moyennées pour chaque groupe de balayages successifs en chevauchement.

9. Procédé de balayage avec séparation de couleurs, selon la revendication 8, caractérisé en ce qu'on amène le lecteur d'image (20) à procéder à quatre balayages successifs en chevauchement de chaque bande linéaire de document qui a une largeur sensiblement égale à un pixel.

10. Procédé de balayage avec séparation de couleurs, selon l'une ou l'autre des revendications 8 ou 9, caractérisé en ce qu'on stocke les données moyennées d'un groupe de balayages successifs en chevauchement dans une première mémoire (56), et en ce qu'on stocke les données moyennées du groupe suivant de balayages successifs en chevauchement dans une seconde mémoire (58), tandis qu'on utilise les données moyennées dans la première mémoire (56) pour commander une imprimante (26, 30).

11. Procédé de balayage avec séparation de couleurs, selon l'une quelconque des revendications 8 à 10, caractérisé en ce qu'on alimente en continu un matériau d'impression à travers une imprimante (26) à la même vitesse que le mouvement relatif continu entre le document (12) et le lecteur d'image (20).

FIG. 1.

FIG.2.

EP 0 357 177 B1

FIG.3.

EP 0 357 177 B1

EP 0 357 177 B1

B → MULTIPLEXER **54**

A

MEMORY A **56**

MEMORY B **58**

MULTIPLEXER **60** → COLOR CORRECTION MODULE **62** → UNSHARP MASKING MODULE **72** → DOT GENERATOR **74**

FIG.4.

FIG.5.